# EUROPEAN PATENT SPECIFICATION

(11) **EP 0 424 809 B1**
(45) Date of publication and mention of the grant of the patent: **10.01.1996**
(21) Application number: 90120015.4
(22) Date of filing: 18.10.1990
(51) Int. Cl.: G11B 11/10

(54) **Magneto-optical recording medium**
Magnetooptisches Aufzeichnungsmedium
Support d'enregistrement magnéto-optique

(30) Priority: 21.10.1989 JP 274734/89; 26.10.1989 JP 277149/89
(43) Date of publication of application: 02.05.1991
(73) Proprietor: SONY CORPORATION, Tokyo (JP)
(72) Inventor: Watanabe, Tetsu,, Shinagawa-ku Tokyo (JP); Watanabe, Hidetoshi, Shinagawa-ku Tokyo (JP)
(74) Representative: TER MEER - MÜLLER - STEINMEISTER & PARTNER

(56) References cited:
- US-A- 4 716 063
- US-A- 4 777 082
- PATENT ABSTRACTS OF JAPAN vol. 6, no. 195 (P-146)(1073) 5 October 1982 & JP-A-57 105 839

## Description

### BACKGROUND OF THE INVENTION

This invention relates to a magnetooptical recording medium wherein information signals are recorded and reproduced by utilizing a magneto-optic effect, and method for manufacturing the same.

In recent years, attention has been directed to, as an erasable high density recording system, a magnetooptical recording system wherein magnetic domains are written in a magnetic thin film by application of a heat energy such as a semiconductor laser beam, thereby recording information and this information is read out by the magneto-optic effect.

The magnetooptical recording medium using in this magnetooptical recording system has generally such an arrangement which comprises a transparent substrate having a thickness sufficient to achieve practically satisfactory rigidity, on which there are formed a magnetooptical recording layer consisting of a dielectric film, a recording magnetic layer and a metallic reflection film, and an uppermost protective layer made of a UV-curable resin. For example US-A-4716063 on which the preamble of claim 1 is based discloses an optomagnetic information recording disk comprising
- a substrate made of transparent plastic, glass or the like
- a magnetic recording layer formed on said substrate, and
- a protective layer formed on said magnetic recording layer.

US-A-4777082 discloses an improved optical magnetic recording medium of this type having a protective layer formed of materials having a very high magnetic permeability.

In both documents mentioned above an optical path for a signal read beam the transparent substrate.

It is necessary to form guide grooves and signal pits for ID on the transparent substrate. The formation technique may be broadly classified into (1) a method wherein a stamper having a reversed pattern formed preliminarily is used for the formation along with the formation of a transparent substrate by injection molding, and (2) a method wherein a UV-curable resin is applied onto a transparent substrate and is brought into intimate contact with a stamper, followed by UV irradiation from the side of the substrate to transfer the pattern (so-called 2P (Photo Polymerization) method). Recently, importance is placed on productivity and economy, so that the injection molding method of (1) is mainly employed. However, the 2P method of (2) has a number of merits such as high fidelity, formation of good disk substrates with respect to dimensional stability, heat resistance and low birefrigence, provision of a magnetooptical recording medium having good recording characteristics owing to the low thermal conductivity of the UV-cured resin layer, and a simple production apparatus.

The recording systems using the magnetooptical recording medium of the above-described type include an optical modulation system wherein a weak DC external magnetic field is invariably applied and a laser beam is irradiated in response to the presence or absence of signals, and a magnetic field modulation system wherein a laser beam with a given intensity is invariably irradiated and an external magnetic field is reversed in response to signals. The optical modulation system has been long studied because the apparatus is relatively simple in arrangement. However, this system is disadvantageous in that it is not possible to overwrite information on once recorded portions and that an erasure operation for magnetization in a given direction is necessary with a writing speed being slow corresponding to that operation. On the other hand, although the magnetic field modulation system is rather complicated in the apparatus, overwriting is possible and high speed recording comparable to that for hard disks in computer systems is possible, with a great possibility in practical applications.

In the magnetic field modulation systems, the magnetic field is reversed at high speed, for which in order to obtain a necessary magnetic field intensity, a magnetic field applicator means should be provided at a position as near as the magnetic layer for recording. Accordingly, it is usual that the magnetic field applicator means is provided not at the side of the thick transparent substrate, but at the side of the thin protective film. The laser beam reaches the magnetic layer for recording through several layers constituting the magnetooptical recording medium. The several layers should be good optical characteristics. In this sense, an optical pickup is provided at the side of the substrate.

In this arrangement, however, the magnetic field applicator means and the optical pickup are facing each other through the magnetooptical recording medium, resulting in a large-sized magnetooptical recording system and a complicated apparatus arrangement. In addition, polycarbonate resins most widely used as the substrate material has birefrigence properties, leaving a problem on the laser beam irradiation from the side of the transparent substrate. Moreover, when a doulbe-sided magnetooptical recording medium capable of recording and reproducing on both sides is assembled as having such a construction that signals are recorded and reproduced from the side of the transparent substrate, difficulties are involved in the realization of the double-sided magnetooptical recording medium applied to the magnetic field modulation system such as a great distance between the magnetic field applicator means and the magnetic layer for recording irrespective of how to locate the magnetic field applicator means.

Under these circumstances in the art, the present applicant proposed a magnetooptical recording medium wherein a photo-polymerisable resin layer having a pattern of guide grooves or ID signal pits is initially formed on a substrate by the 2P method, a magnetooptical recording layer reflected with the pattern, an adhesive layer absorbing the pattern to flatten the substrate surface, and a transparent protective sheet adhered to the adhesive layer. The transparent protective sheet used is a cover glass having good optical characteristics, enabling one to pass a laser beam from the side of the transparent protective plate. In addition, the transparent protective sheet is a thin material layer having a thickness of 50 - 200 µm, so that the distance between the magnetic field applicator means provided at the side of the transparent protective sheet and the magnetic layer for recording is not made so great, without any trouble involved in the application of a magnetic field. Accordingly, the laser beam irradiation from the side of the transparent protective sheet and the application of a magnetic field are possible. It is also possible to provide recording units at opposite sides of the substrate by which a double-sided magnetooptical recording medium capable of magnetic field modulation recording can be provided.

However, in order to achieve reliably good practical characteristics in the magnetic field modulation system, it is a key point how to efficiently utilize an applied magnetic field. If the applied magnetic field can be efficiently utilized, the heat generation of the magnetic field applicator means may be suppressed, for example. Alternatively, mechanical strength can be increased by increasing the thickness of the transparent protective sheet.

In order to efficiently utilize the applied magnetic field, a high magnetic permeability layer may be adopted as disclosed, for example, in Japanese Laid-open Patent Application Nos. 57-105838 and 57-105839. However, the application to media of the type discussed before involves several problems.

One such problem is an influence of heating during the fabrication process. The magnetic layer for recording of magnetooptical recording media is usually formed by sputtering. The heat generated during the sputtering will lower the permeability of the high magnetic permeability magnetic thin film, or will produce a stress due to the difference in thermal expansion coefficiency with an adjacent magnetic layer for recording.

Another problem is that when buildup of functional thin films is repeated, the pattern of guide grooves or signal pits for ID is turned unclear. In the medium arrangement disclosed in Japanese Laid-open Patent Application No. 57-105839, these patterns are formed by transfer to a substrate with a stamper, etching or the 2P method. It is considered that since the magnetic layer for recording is formed thereon with the high magnetic permeability magnetic thin film and, in some case, through a non-magnetic intermediate layer, the pattern in the magnetic layer becomes unclear. Especially, the high permeability magnetic thin film and the non-magnetic intermediate layer should have appropriate thicknesses in order to show their effects, so that it may be difficult to precisely reflect these patterns on the magnetic layer for recording depending on the manner of the step coverage.

### OBJECT AND SUMMARY OF THE INVENTION

Therefore, the present invention has for its object the provision of a magnetooptical recording medium wherein an applied magnetic field can be efficiently utilized and guide grooves and pits for ID signals can be reliably formed in a magnetooptical recording layer and wherein laser beam irradiation and magnetic field application from the side of a transparent protective sheet are possible.

According to one aspect of the present invention there is provided a magnetooptical recording medium comprising a substrate, a high magnetic permeability layer formed on a surface of the substrate, a photopolymerizable resin layer formed on the high magnetic permeability layer having a guide groove and/or signal pits formed on a surface remote from the high magnetic permeability layer, a magnetooptical recording layer formed on the photopolymerizable resin layer over the guide groove and/or signal pits, and a transparent protective layer formed on the magnetooptical recording layer.

### DESCRIPTION OF THE PREFERRED EMBODIMENTS

The present inventors made intensive studies in order to achieve the above object and found that on the assumption that a magnetic field was applied from the side of a transparent protective sheet, the high magnetic permeability layer should be provided at the substrate side, and in order to reduce the stress due to heating during the fabrication process and to ensure formation of a precise pattern, the high magnetic permeability layer should favorably be formed between the substrate and the photopolymerizable resin layer.

The magnetooptical recording medium according to the invention is proposed based on the above finding and is characterized by superposing, on a substrate, a high magnetic permeability layer, a photopolymerizable resin layer having guide grooves and/or signal pits formed therein, a magnetooptical recording layer and a transparent protective sheet in this order.

The magnetooptical recording medium of the invention is on the assumption that the laser beam irradiation and magnetic field application are performed from the side of the transparent protective sheet.

The layer formed initially in contact with the substrate is the high magnetic permeability layer. By the presence of the high magnetic permeability layer, the magnetic flux generated from a magnetic field applicator means such as a magnetic coil is passed through the upper transparent protective sheet, the magnetooptical recording layer and the photopolymerizable resin layer substantially vertically with respect to the face of the medium. Subsequently, the flux proceeds in the high magnetic permeability layer in the in-plane direction to a distance corresponding to the intensity of the magnetic field, and is returned through the upper layers to the magnetic field applicator means, thereby drawing a closed magnetic loop. This means that the efficiency of the vertical magnetic field is remarkably improved. More particularly, if the intensity of the magnetic field in the magnetooptical recording layer is satisfactory, it is possible to employ a magnetic applicator means whose magnetic field is not so intense. On the other hand, when the intensity of the magnetic field produced by the magnetic field applicator means is satisfactorily high, the thickness of the transparent protective sheet can be increased, which is effective in enhancing the mechanical strength and the reliability of the magnetooptical recording medium.

Further, the uppermost layer of the magnetooptical recording medium of the invention is the transparent protective sheet. When a cover glass or the like is used as the transparent protective layer, birefrigence which will cause a reproduction error is overcome. In addition, the provision of the magnetic field applicator means at the side of the laser beam irradiation does not involve a substantial increase in the distance with the magnetooptical recording layer.

Since the laser beam is irradiated from the side of the transparent protective layer, it becomes possible to provide a magnetooptical recording layer at opposite sides of the substrate, thereby obtaining a double-sided magnetooptical recording medium. A known double-sided magnetooptical recording medium is fabricated in such a way that two single-sided magnetooptical recording media are adhered together wherein the respective magnetooptical recording layers are facing each other and the respective substrates are exposed to outside. This makes the medium to be undesirably thick and the distance between the magnetic field applicator means and the magnetooptical recording layer inevitably increases, making it difficult to apply the medium to the magnetic field modulation system. In contrast, since the magnetic field applicator means is moved close to from the side of the transparent protective sheet in accordance with the present invention, it is possible to provide a double-sided magnetooptical recording medium which is applicable to the magnetic field modulation system.

In the practice of the invention, a photopolymerizable resin layer is formed on the high magnetic permeability layer without undergoing any heating step, so that the permeability of the high magnetic permeability layer cannot be lowered. The photopolymerizable resin layer has a low thermal conductivity and, when a magnetooptical recording layer is formed on the photopolymerizable resin layer, can relax a stress as will be caused by heating, thereby preventing occurrence of crack. In addition, if the high magnetic permeability layer has a slight irregularity in thickness, it will be expected that the irregularity is smoothed by the fluidity of the resin at the time of the formation of the photopolymerizable resin layer. The magnetooptical recording layer is formed directly on the photopolymerizable resin layer, so that the pattern of the photopolymerizable resin layer is precisely reflected in the magnetooptical recording layer, without the possibility that any reproduction error caused by an unclear pattern is produced.

### BRIEF DESCRIPTION OF THE DRAWINGS

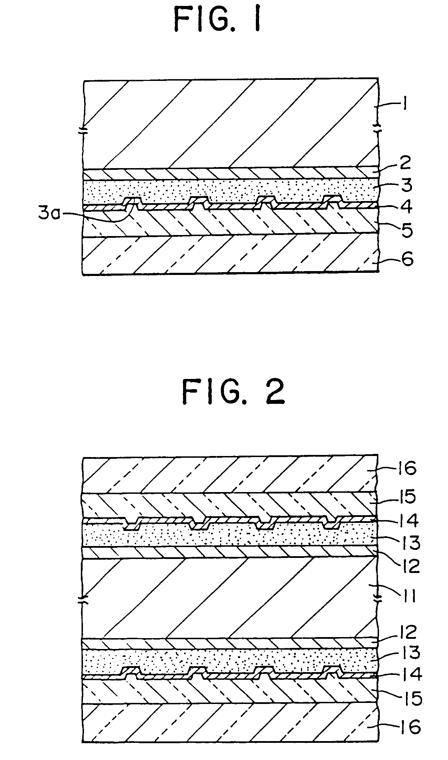

Fig. 1 is a schematic section view showing an essential part of a single-sided magnetooptical disk according to the invention; and Fig. 2 is a schematic sectional view of an essential part of a double-sided magnetooptical disk according to the invention.

Magnetooptical disks according to embodiments of the invention are described with reference to the accompanying drawings.

As shown in Fig. 1 a magnetooptical disk in this embodiment has a substrate (1) on one side of which there are superposed a high magnetic permeability layer (2), a photopolymerizable resin layer (3) having a pattern of guide grooves (3a) and signal pits for ID (not shown), a thin magnetooptical recording layer (4) formed according to the pattern of the photopolymerizable resin layer, an adhesive layer (5) absorbing the pattern of the magnetooptical recording layer (4) to make a flat surface, and a transparent protective sheet (6) serving to an uppermost layer of the medium.

The substrate (1) has a thickness of several to several tenth millimeters and is a 1.2 mm thick disk in this embodiment. The materials for the substrate include aside from plastic materials such as acrylic resins, polycarbonate resins, polyolefin resins, polymethyl methacrylate resins, epoxy resins and the like, rigid materials such as glass, ceramics and the like. Especially, when glass is used, there can be obtained a magnetooptical disk which undergoes little damage or deformation due to the external action and is hardly deposited with dust because the glass is unlikely to be electrically charged. The magnetooptical disk of the invention is not designed to be irradiated with a laser beam from the side of the substrate and the substrate (1) is not necessarily be constituted of transparent materials. It may be effective to use materials, such as Al, having a high reflection factor.

The high magnetic permeability layer (2) is formed by subjecting soft magnetic materials having high magnetic permeability such as transition metals including Fe, Co, Ni and the like and alloys thereof including Fe-Ni alloy (Permalloy), Fe-Si-Al alloy (Sendust) and the like, to sputtering, vacuum deposition, plating or the like, in a thickness of approximately 1 - 10 µm. The initial permeability of the layer is selected to be not less than 500. If the permeability is lower than this range, the film thickness has to be increased in order to obtain a focusing effect of a given external magnetic field, with the possibility that the thickness of the medium has undesirably be increased or the pattern of the magnetooptical recording layer is made unclear. It will be noted that the high magnetic permeability layer (2) should preferably have the above-defined initial permeability and a high magnetic flux density of not less than approximately 5000 gausses.

The photopolymerizable resin layer (3) is formed in a thickness of 5 - several tens µm by the so-called 2P method using resins cured by polymerization by light irradiation. The photo-curable resins used in the 2P method should be materials which have good adhesion to the high magnetic permeability layer (2) and good transferability and release properties with respect to a stamper and which exhibit a reduced degree of shrinkage by the polymerization and are unlikely to have unreacted monomer and volatile low molecular weight compounds left after the polymerization. For instance, known UV-curable resin compositions in which sensitizers are added to various acrylic resins are applicable. In an ordinary 2P method, a metallic stamper in which a reversed pattern of guide grooves or ID signal pits has been preliminarily formed and a substrate are facing each other in a spaced relation, between which a photopolymerizable resin is charged, followed by UV irradiation from the side of the substrate for curing. Accordingly, the substrate has to be transparent. However, since the opaque high magnetic permeability layer (2) is formed on the substrate although the substrate (1) is transparent, it is necessary to constitute the stamper from a transparent material and to subject the light irradiation from the stamper side. The transparent stamper can be fabricated by etching of a glass substrate, injection molding of polymer materials, the 2P method or patterning of resist materials.

It will be noted that the formation of the photopolymerizable resin layer (3) is not required to heat, without any possibility that the permeability of the high magnetic permeability layer (2) is lowered.

Next, the magnetooptical recording layer (4) is a layer which is a combination of a vertical mangetization thin film keeping information and a functional thin film such as dielectric film or a metallic reflection film.

The vertical magnetization thin film which takes direct part in the storage of information signals, recording and reproduction should be selected from materials which satisfy (1) a great vertical anisotropy energy and likelihood for a vertical magnetization film necessary for high density recording, (2) a relatively large Kerr rotation angle and (3) a low Curie temperature (150- 200°C) and the possibility of recording and erasing by the use of commercial semiconductor laser devices (20 - 40 mW). Typical examples of the materials include combinations of rare earth elements (RE) such as Gd, Tb, Dy and the like, and transition metal elements (TM) such as Fe, Co and the like. Especially, TbFeCo films and GdTbFe films containing Tb as the rare earth element exhibit great vertical magnetization anisotropy and are high in practical applications.

The dielectric film is provided for the purpose of improving the corrosion resistance and increasing the Kerr rotation angle (the enhancement of the Kerr's effect) due to the multiple reflection, and can be obtained by subjecting oxides, nitrides and oxynitrides to vacuum thin film formation techniques. The dielectric film is ordinarily formed to sandwiching the vertical magnetization thin film.

The metallic reflection film is provided by further increasing the angle of rotation by the combination of the Kerr effect with the Farady effect by which the laser beam transmitted through the RE-TM film is reflected, and is usually constituted of metal materials such as Al, Au, Pt, Cu and the like. The magnetooptical disk is recorded and reproduced from the side of the transparent protective sheet (6), so that the metallic reflection film should be provided at a position nearest to the substrate (1) among the magnetooptical recording layer (4).

The functional thin film constituting the magnetooptical recording layer (4) is formed by vacuum thin film formation techniques such as sputtering. Accordingly, slight heat is generated during the film formation but the photopolymerizable resin layer (3) which is in contact therewith and has a low thermal conductivity can mitigate the influence of the heat, giving little influence on the high magnetic permeability layer (2). The total thickness of the magnetooptical recording layer (4) is approximately in the range of several hundreds to several thousands angstroms. This thickness does not absorb steps such as the guide grooves (3a) or pits formed in a depth of 1/4 times the wavelength (approximately 2000 angstroms) of an ordinary near infrared semiconductor laser beam, and these patterns are correctly reflected in the surface of the magnetooptical recording layer (4).

The uppermost surface of the magnetooptical disk is covered with the transparent protective sheet (6) with a thickness of 50 - 300 µm through the adhesive layer (5).

The materials for the adhesive layer (5) may be those resins used to form the photopolymerizable resin layer (3). The thickness of the adhesive layer (5) is so selected that the surface steps of the magnetooptical recording layer (4) can be absorbed and satisfactory adhesiveness is ensured. It is preferred from the standpoint of arranging the magnetic field applicator means near the magnetooptical recording layer (4) that the layer is as thin as possible.

For similar reasons with the photopolymerizable resin layer (4), the transparent protective sheet (6) should be as thin as possible. However, in the practice of the invention, the efficiency of the vertical magnetic field can be increased due to the presence of the high magnetic permeability layer (2). The tolerance of the thickness of the transparent protective sheet (6) is relative large and the thickness may be 50 - 300 µm. When the thickness is appropriate, the resistance to impact from outside can be increased. The transparent protective sheet (6) should have good optical characteristics such as transparency and the most appropriate material therefor is a cover glass. However, the thickness is very smaller than that of the substrate (1). In this sense, materials having a slight degree of birefrigence may be used with little influence.

In the magnetooptical disk having such a construction as stated before, an optical pickup for irradiating a laser beam and a magnetic applicator means such as a magnetic coil is provided at the side of the transparent protective sheet. Since the transparent protective sheet (6) is so thin that the magnetic applicator means can be approach the magnetooptical recording layer (4), the disk is applicable to magnetic field modulation systems. Since a laser beam can be irradiated from the side of the transparent protective sheet (6), any trouble, such as birefrigence, as is experienced in a known case where irradiation is made from the side of a polycarbonate substrate is avoided, with an attendant improvement in reliability for reproduction. When an aperture of an objective lens of an optical pickup and a working distance (i.e. a distance between a mirror frame of the lens and a disk face) is considered as constant, focusing of a laser beam irradiated from the side of the thin transparent protective sheet (6) on the magnetooptical recording layer (4) means that a focusing distance is shortened, resulting in an increase in numerical aperture of the objective lens. Accordingly, a high recording density becomes possible.

This type of magnetooptical disk has several merits with respect to the arrangement of the magnetooptical recording system using the disk.

For instance, when an optical pickup provided with a focusing servo mechanism or a track servo mechanism is wound therearound with a coil for application of a magnetic field, the optical pickup and a magnetic applicator means can be integrally combined in a small size. In addition, the high magnetic permeability layer (2) provided in the magnetooptical disk of the invention can effectively focus a magnetic flux produced from the magnetic applicator means. Thus, it is not necessary to provide an intense magnetic field, for example, by increasing the winding number of coils or increasing the diameter of the coil, making it possible to miniaturize the pickup or to reduce the amount of heat.

For the designing of a drive system for the disks limitation on loading or chucking of the disk becomes less, with an increasing degree of freedom.

In the above description, the single-sided disk has been described and the present invention is applicable to double-sided disks.

Fig. 2 shows an embodiment of the invention dealing with a double-sided disk wherein one substrate (11) is provided a on opposite sides thereof with a high magnetic permeability layer (12), a photopolymerizable resin layer (13), an magnetooptical recording layer (14), an adhesive layer (15) and a transparent protective sheet (16) superposed in this order. In the double-sided disk, the substrate is commonly used, making it possible to reduce the thickness of the medium to about half that of known, bonded double-sided disks.

Similar to the single-sided disk, the respective magnetooptical recording layers (14) may be recorded and reproduced according to a magnetic field modulation system wherein an optical pickup and a magnetic applicator means are provided at the same side. The application of the magnetic field modulation system to the double-sided disk is one of the greatest merits in the present invention. According to the above arrangement, both sides may be accessed at the same time.

The form of the magnetooptical recording medium according to the invention is not limited only to the disk, but the medium may be, for example, in the form of a card, a tape, a drum or the like.

## Claims

1. A magnetooptical recording medium comprising:
- a substrate (1),
- a magnetooptical recording layer (4), and
- a protective layer (6) formed on said magnetooptical recording layer (4),
**characterized by**
- a high magnetic permeability layer (2) formed on a surface of said substrate,
- a photopolymerizable resin layer (3) formed on said high magnetic permeability layer (2) having a guide groove (3a) and/or signal pits formed on a surface remote from said high magnetic permeability layer (2),
wherein said magnetooptical recording layer (4) is formed on said photopolymerizable resin layer (3) over said guide groove (3a) and/or signal pits, and
said protective layer (6) is transparent.

2. A magnetooptical recording medium according to claim 1, said high magnetic permeability layer (2) has an initial permeability of not less than 500, and a saturation magnetic flux density of not less than 5000 gauss.

3. A magnetooptical recording medium according to claim 1, said magnetooptical recording layer (4) is formed of a reflective layer, a dielectric layer a magnetic layer having perpendicular anisotropy and a dielectric layer formed in this order.

4. A magnetooptical recording medium according to claim 3, said magnetic layer (4) is formed of an amorphous alloy of rare earth element and transition metal element.

5. A magnetooptical recording medium according to claim 1, said transparent protective layer (6) is a thin glass plate bonded by an adhesive (5).

6. A magnetooptical recording medium according to claim 1, further comprises another set of said high magnetic permeability layer (12) through said transparent protective layer (16) formed on another surface of said substrate (11).

## Patentansprüche

1. Magnetooptisches Aufzeichnungsmedium mit:
- einem Substrat (1);
- einer magnetooptischen Aufzeichnungsschicht (4) und
- einer Schutzschicht (6), die auf der magnetooptischen Aufzeichnungsschicht (4) ausgebildet ist;
**gekennzeichnet durch**
- eine Schicht (2) mit hoher magnetischer Permeabilität, die auf einer Oberfläche des Substrats ausgebildet ist;
- eine photopolymerisierbare Harzschicht (3), die auf der Schicht (2) mit hoher magnetischer Permeabilität ausgebildet ist und einen Führungsgraben (3) und/oder Signalpits auf derjenigen Oberfläche aufweist, die von der Schicht (2) mit hoher magnetischer Permeabilität abgewandt ist;
- wobei die magnetooptische Aufzeichnungsschicht (4) über dem Führungsgraben (3a) und/oder den Signalpits auf der photopolymerisierbaren Harzschicht (3) ausgebildet ist;
- wobei die Schutzschicht (6) transparent ist.

2. Magnetooptisches Aufzeichnungsmedium nach Anspruch 1, bei dem die Schicht (2) mit hoher magnetischer Permeabilität eine Anfangspermeabilität nicht unter 500 und eine Sättigungs-Magnetflußdichte nicht unter 5000 Gauss aufweist.

3. Magnetooptisches Aufzeichnungsemdium nach Anspruch 1, bei dem die magnetooptische Aufzeichnungsschicht (4) aus einer reflektierenden Schicht, einer dielektrischen Schicht, einer magnetischen Schicht mit rechtwinkliger Anisotropie und einer dielektrischen Schicht besteht, die in dieser Reihenfolge ausgebildet sind.

4. Magnetooptisches Aufzeichnungsmedium nach Anspruch 3, bei der die magnetische Schicht (4) aus einer amorphem Legierung aus einem Seltenerdelement und einem Übergangsmetallelement besteht.

5. Magnetooptisches Aufzeichnungsmedium nach Anspruch 1, bei dem die transparente Schutzschicht (6) eine mit einem Kleber (5) angebrachte dünne Glasplatte ist.

6. Magnetooptisches Aufzeichnungsmedium nach Anspruch 1, ferner mit einem Satz aus der Schicht (12) mit hoher magnetischer Permeabilität bis zur transparenten Schutzschicht (16), der auf der anderen Fläche des Substrats (11) ausgebildet ist.

## Revendications

1. Support d'enregistrement magnétooptique, comprenant :
- un substrat (1),
- une couche (4) d'enregistrement magnétooptique, et
- une couche protectrice (6) formée sur la couche (4) d'enregistrement magnétooptique,
caractérisé par
- une couche (2) de perméabilité magnétique élevée formée sur une surface du substrat, et
- une couche (3) de résine photopolymérisable formée sur la couche (2) de perméabilité magnétique élevée et ayant une gorge (3a) de guidage et/ou des creux de signalisation, formés sur une surface distante de la couche (2) à perméabilité magnétique élevée,
dans lequel la couche (4) d'enregistrement magnétooptique est formée sur la couche (3) de résine photopolymérisable au-dessus de la gorge de guidage (3a) et/ou des creux de signalisation, et la couche protectrice (6) est transparente.

2. Support d'enregistrement magnétooptique selon la revendication 1, dans lequel la couche (2) de perméabilité magnétique élevée a une perméabilité initiale qui n'est pas inférieure à 500, et une densité de flux magnétique à saturation qui n'est pas inférieure à 5 000 G.

3. Support d'enregistrement magnétooptique selon la revendication 1, dans lequel la couche (4) d'enregistrement magnétooptique est formée d'une couche réfléchissante, d'une couche diélectrique, d'une couche magnétique ayant une anisotropie perpendiculaire, et d'une couche diélectrique, formées dans cet ordre.

4. Support d'enregistrement magnétooptique selon la revendication 3, dans lequel la couche magnétique (4) est formée d'un alliage amorphe d'un élément des terres rares et d'un métal de transition.

5. Support d'enregistrement magnétooptique selon la revendication 1, dans lequel la couche protectrice transparente (6) est une mince plaque de verre collée par un adhésif (5).

6. Support d'enregistrement magnétooptique selon la revendication 1, qui comporte en outre un autre ensemble allant de la couche (12) de perméabilité magnétique élevée à la couche protectrice transparente (16) formée sur une autre face du substrat (11).
